# EUROPEAN PATENT APPLICATION

(11) **EP 3 647 837 A1**
(43) Date of publication of application: **06.05.2020**
(21) Application number: 18203505.5
(22) Date of filing: 30.10.2018
(51) Int. Cl.: G02B 5/22, G09F 13/10

(54) **DISPLAY UNIT COMPRISING A STACK OF LAYERS**

(71) Applicant: Koninklijke Philips N.V., 5656 AG Eindhoven (NL)
(72) Inventor: VUGTS, Marinus Arnoldus Martinus, 5656 AE Eindhoven (NL)
(74) Representative: de Haan, Poul Erik

(57) **Abstract**

A display unit (30) comprises a light-emitting layer (31) for emitting light in an actuated state thereof, a pattern-defining layer (34), and a light-shaping layer (33) located between the light-emitting layer (31) and the pattern-defining layer (34). Both the light-shaping layer (33) and the pattern-defining layer (34) comprise areas of different transparency to the light emitted by the light-emitting layer (31) in the actuated state thereof. Advantageously, a pattern of areas of different transparency in the light-shaping layer (33) is adapted to a pattern of areas of different transparency in the pattern-defining layer (34), so that corresponding patterns are obtained in the respective layers (33, 34), and a pattern of light images as projected on the pattern-defining layer (34) and as defined by the light-shaping layer (33) during operation of the display unit (30) may accurately match the pattern of areas of different transparency in the pattern-defining layer (34).

## Description

### FIELD OF THE INVENTION

The invention relates to a display unit comprising a stack of layers, the stack of layers including a light-emitting layer that is configured and arranged to emit light in an actuated state thereof. The invention further relates to an appliance comprising a display unit as mentioned, which appliance may be one of a personal care appliance, a domestic appliance and a medical appliance.

### BACKGROUND OF THE INVENTION

It is well known for appliances to be equipped with some kind of display unit for providing a user of an appliance with information that can be visually detected by the user. In many cases, the appliance includes a display unit having light-emitting means configured to emit light in an actuated state thereof. In general, by means of a display unit, it is possible to use variations of characteristics of the light such as intensity and/or color for the purpose of conveying information to the user. For example, a display unit may be controlled to indicate an on state or an off state of an appliance to a user by putting the light-emitting means to the actuated state or an off state. Further, a display unit may comprise one or more areas of a certain shape so that when the light-emitting means are in an actuated state, the user may experience that one or more light images are displayed.

In many cases, it is preferred to have a display unit of a layered design, i.e. a display unit comprising a stack of layers, wherein at least one of the layers is designed to function as a light-emitting layer, i.e. a layer that is configured to emit light in an actuated state thereof. In a type of layered display unit that is referred to as backlit layered display unit, the light-emitting layer is not located at a viewing side of the display unit but deeper down in the display unit, i.e. more to the back of the display unit, wherein the light-emitting layer is covered by at least another layer of transparent material or semi-transparent material.

One known embodiment of a backlit layered display unit is referred to as ablation-based display unit. An ablation-based display unit comprises a light-emitting layer that includes individual light sources such as LEDs, lasers, etc., and a layer of a base material that is transparent to the light emitted by the light-emitting layer in the actuated state thereof, such as a transparent polymer, wherein the light-emitting layer is arranged at a back side of the layer of base material.

At a front side of the layer of base material, more layers of the display unit are present, namely an ablated opaque layer arranged on the layer of base material, and one or more transparent or semi-transparent lacquer layers arranged on the ablated opaque layer. The ablated opaque layer has a number of ablations, i.e. open spaces in the layer, which may have been made by means of laser ablation techniques, for example. The ablations of the ablated opaque layer are filled with portions of at least the lacquer layer that is arranged directly on the ablated opaque layer. When the light-emitting layer is in the actuated state, a user experiences the appearance of the display unit so as to involve light shining from one or more of the ablations, depending on which light sources of the light-emitting layer are actuated. When the light-emitting layer is in the off state, the delimitation of the ablations with respect to the surrounding opaque material is not or only vaguely visible.

Another known embodiment of a backlit layered display unit is referred to as projection-based display unit. Like the ablation-based display unit, the projection-based display unit comprises a light-emitting layer that includes individual light sources such as LEDs, lasers, etc., and a layer of a base material that is transparent to the light emitted by the light-emitting layer in the actuated state thereof. Different from the ablation-based display unit, the projection-based display unit further comprises a masking module comprising a front layer and walls extending from the front layer in a backward direction so as to extend between different light sources of the light-emitting layer and to thereby separate those light sources from each other. The front layer of the masking module is arranged at the back side of the layer of base material and has opaque areas at the positions of the walls and transparent areas at positions between the opaque areas so that the respective transparent areas are suitable for allowing light from the respective light sources of the light-emitting layer to pass.

Besides the light-emitting layer, the layer of base material and the masking module, the projection-based display unit comprises one or more transparent or semi-transparent lacquer layers that are located on the front side of the layer of base material. When the light-emitting layer is in the actuated state, a user experiences the appearance of the display unit so as to involve projected images of one or more of the individual light sources of the light-emitting layer, depending on which light sources are actuated.

A disadvantage of the ablation-based display unit is that a distance between individual ablations needs to be relatively large in cases in which it is intended to provide each of the ablations with light emitted by a particular one of the light sources of the light-emitting layer only. This disadvantage is especially relevant when it is desired to have one or more modes of operation of the display unit in which not all of the ablations are to be used for allowing light to pass, as in such modes of operation, it is necessary that light is emitted from the light-emitting layer to at least one ablation, whereas at least one other ablation should not be addressed with light. In order to realize such modes of operation, the light sources of the light-emitting layer are controlled individually, but as explained, it may happen that a problem of one ablation receiving light from a light source that is actually intended to shine light to another ablation occurs. This problem is commonly known as cross talk. Another example of a situation in which cross talk is highly undesirable is a situation in which the ablations are to be provided with light of different color. The fact is that cross talk has a negative influence on the quality of the display unit, at least in an esthetic sense and probably even in a functional sense when the information provided by the display unit to a user is not as clear as it should ideally be.

A disadvantage of the projection-based display unit is related to the fact that it is difficult to control positioning accuracy of the projected images. Thus, in practice, also in case of the projection-based display unit, the quality of the display unit is often not optimal as patterns of projected images cannot be realized exactly in the way as envisaged. Assuming that the display unit is manufactured in mass production, this causes the display units to differ from each other, contrary to what is expected in mass production.

In view of the disadvantages associated with known display units, it is an object of the invention to provide a layered display unit having improved performance when it comes to displaying a pattern of light images.

### SUMMARY OF THE INVENTION

According to the invention, a display unit is provided, particularly a display unit comprising a stack of layers, the stack of layers including a light-emitting layer, a pattern-defining layer and a light-shaping layer located between the pattern-defining layer and the light-emitting layer, wherein out of the light-emitting layer, the pattern-defining layer and the light-shaping layer, the pattern-defining layer is located most to a viewing side of the display unit, wherein the light-emitting layer is configured and arranged to emit light in an actuated state thereof, in a direction towards the light-shaping layer and the pattern-defining layer, and wherein both the light-shaping layer and the pattern-defining layer comprise areas of different transparency to the light emitted by the light-emitting layer in the actuated state thereof.

It follows from the foregoing definition of the display unit according to the invention that the display unit comprises a pattern-defining layer and a light-shaping layer besides a light-emitting layer. Out of the three layers as mentioned, the pattern-defining layer is located most to a viewing side of the display unit, and the light-shaping layer is located between the pattern-defining layer and the light-emitting layer. The stack of layers of the display unit may particularly be a spaced stack of layers.

In a general sense, a notable fact of the display unit is that both the light-shaping layer and the pattern-defining layer comprise areas of different transparency to the light emitted by the light-emitting layer in the actuated state thereof. On the basis of such design and positioning of the respective layers of the display unit, it is achieved that a pattern of images can be accurately displayed when the display unit is operated.

In the first place, the light-shaping layer serves to exactly determine both size and position of areas through which light may shine from the light-emitting layer to the pattern-defining layer at a certain intensity, wherein the intensity of the light that is allowed to pass on to the pattern-defining layer is influenced by the extent to which the areas are transparent. In practical embodiments of the display unit according to the invention, the transparency of one or more areas of the light-shaping layer may be so low that those areas are in fact opaque and have a function in blocking the light. In the second place, the pattern-defining layer serves to exactly determine both size and position of areas through which light that is passed on by the light-shaping layer may shine from the display unit, wherein it is also possible to have opaque areas. Thus, when the invention is put to practice, the problem of cross talk is alleviated by applying the light-shaping layer, and the problem of positioning inaccuracy of projected images is alleviated by applying the pattern-defining layer. All it takes to realize a pattern of light images as desired is to design the pattern-defining layer so as to have areas of relatively high transparency to the light at the positions where light images are to be displayed, and to design the light-shaping layer so that light shining from the light-emitting layer in the actuated state thereof is passed on to the pattern-defining layer in such a way that each of the areas of relatively high transparency are provided with light from a predetermined area of the light-emitting layer. In the context of the invention, similar to what is the case in conventional situations, the light-emitting layer may comprise individual light-emitting areas in the form of individual light sources such as LEDs, lasers, etc.

The advantageous aspects of the invention are now further explained in the context of a practical embodiment of the display unit according to the invention in which the light-emitting layer comprises a number of individual light sources, and in which both the pattern-defining layer and the light-shaping layer comprise transparent areas and opaque areas, the number of the transparent areas in both the pattern-defining layer and the light-shaping layer being the same as the number of the individual light sources in the light-emitting layer. The pattern of transparent areas in the pattern-defining layer is chosen in dependence of a desired pattern of light images to be displayed. Each of the individual light sources in the light-emitting layer is at a position for projecting light on an associated one of the transparent areas in the pattern-defining layer. The light-shaping layer is between the light-emitting layer and the pattern-defining layer and is designed to define the exact size and shape of the projected light areas on the pattern-defining layer, such that the projected light areas of the individual light sources do not overlap at the positions of the transparent areas of the pattern-defining layer whereby it is ensured that each transparent area of the pattern-defining layer only receives light from an associated one of the light sources. Further, in view of the fact that the light-shaping layer has a function in realizing accurate projection of light on the pattern-defining layer, it is possible for the various transparent areas of the pattern-defining layer to be arranged close to each other if so desired, different from what is the case in conventional display units, without introducing cross talk. In order to further minimize cross talk, it may be practical for the display unit to comprise optical barriers separating the light sources at a position between the light-emitting layer and the light-shaping layer. Such optical barriers may be provided in the form of opaque walls extending all the way between the light-emitting layer and the light-shaping layer, for example.

As suggested earlier, it may be advantageous to have individual control of the light sources so as to have a possibility of realizing various modes of operation of the display unit, which modes may be different in various ways, for example, as far as the number of transparent areas of the pattern-defining layer to which light is projected and the number of transparent areas of the pattern-defining layer that are not addressed with light are concerned. The individual light sources may be designed/operated to emit light in practically the same fashion, but it is also possible for one light source to emit light at another intensity and/or color and/or other characteristic than another light source. The light sources may be designed to mainly emit light in a predetermined range of directions instead of randomly in all directions. The light sources may be placed on any suitable carrier. A printed circuit board is a very practical example of a carrier that may be used in the display unit.

It follows from the foregoing that, generally speaking, it may be advantageous if the light-shaping layer is configured to project the light to at least one area of the pattern-defining layer having higher transparency to the light than at least one other area of the pattern-defining layer. Similarly, in case the pattern-defining layer comprises at least two areas having higher transparency to the light than at least one other area of the pattern-defining layer, it may be advantageous if the light-shaping layer is configured to project the light to each of the at least two areas of the pattern-defining layer having higher transparency to the light. In the latter case, the light-emitting layer may comprise at least two light-emitting areas, and the light-shaping layer may be configured to project the light emitted by respective light-emitting areas of the light-emitting layer in the actuated state of the light-emitting layer to respective areas of the pattern-defining layer having higher transparency to the light, such that each of the respective areas of the pattern-defining layer is provided with light of only one of the light-emitting areas of the light-emitting layer. Further, the display unit may be equipped with a driver that is configured to separately vary the intensity of the light emitted by the respective light-emitting areas of the light-emitting layer in the actuated state of the light-emitting layer, wherein it is noted that switching the light-emitting areas on and off should be understood as a way of varying the intensity of the light emitted by the light-emitting areas, namely between zero and a value higher than zero.

In a practical embodiment of the display unit according to the invention, it may be so that at least one of the light-shaping layer and the pattern-defining layer comprises material configured to block the light, and that, in at least one of the light-shaping layer and the pattern-defining layer, at least one area of the respective layer having higher transparency to the light than at least one other area of the respective layer comprises an ablation of the material. Such ablation may be a laser ablation, for example.

Alternatives to embodiments of the light-shaping layer and/or the pattern-defining layer comprising a structure of ablated material include embodiments in which the respective layer is realized on the basis of a printed pattern on a suitable carrier. The carrier may be a piece of material that is included in the basic design of the display unit anyway, or may be a piece of material to be added to the basic design, such as a foil. In any case, it may be advantageous for the carrier to be transparent. Any suitable printing technique for applying a printed pattern to the carrier may be used in a printing process of the carrier, such as screen printing or inkjet printing. It follows that in a general sense, it may be practical for the at least one of the light-shaping layer and the pattern-defining layer to comprise material that is provided with a patterned coating.

In the context of the invention, it is possible for the light-shaping layer to comprise a sheet of material provided with at least one hole for allowing the light to pass through. In such a case, at least one area of optimal transparency to the light is realized at the position of the at least one hole. Additionally or alternatively, it is possible for the light-shaping layer to comprise at least one piece of material that is configured to block the light and at least one piece of material that is transparent to the light. Further, also additionally or alternatively, the light-shaping layer may comprise a sheet of material that is transparent to the light and that is covered on one side thereof by a coating that is configured to block the light and that has at least one ablated area. The light-shaping layer can be realized in any appropriate form. For example, the light-shaping layer may comprise one of a foil and a molded part.

At least the option of having at least one piece of material that is configured to block the light and at least one piece of material that is transparent to the light, and the option of having a sheet of material that is transparent to the light and that is covered on one side thereof by a coating that is configured to block the light and that has at least one ablated area are applicable to the pattern-defining layer as well.

In general, it may be practical to have an embodiment of the display unit according to the invention in which the light-shaping layer comprises a transparent foil that is provided with a printed pattern, particularly a printed pattern having open areas of a shape as desired for allowing the light to pass through. Further, an injection-molded part may be applied in the display unit, wherein the injection-molded part is configured and arranged so as to define optical barriers between individual light sources of the light-emitting layer, and wherein the foil is placed on top of the injection-molded part. Alternatively, an injection-molded part is applied that is not only configured and arranged to define the optical barriers, but also the pattern of areas of the light-shaping layer of different transparency to the light, in which case there is no need for having a separate foil for realizing the light-shaping layer.

It may be practical for the display unit according to the invention to comprise a sheet that is transparent to the light and that is provided on one side thereof with a paint layer having at least one ablated area, as in such a case the areas of the pattern-defining layer of different transparency to the light can be defined by the paint layer. Further, in such a case, the light-shaping layer may be integrated in the same sheet, at a distance from the paint layer. Alternatively, it is possible that the locally different light passing properties of the pattern-defining layer are determined by the design of a printed ink layer in the display unit, for example.

The display unit according to the invention may comprise one or more other layers besides the light-emitting layer, the pattern-defining layer and the light-shaping layer. For example, the display unit may further comprise a cover layer that is applied to the pattern-defining layer at the viewing side of the display unit, and that is only partially transparent to the light. On the basis of a cover layer as mentioned, the display unit may be of the type that is hidden until lit, which may contribute to a user's appreciation of the appearance of an appliance in which the display unit is incorporated. In such a case, for the purpose of avoiding a formation of hot spots at the level of the pattern-defining layer, it may be advantageous if the display unit is further equipped with a light-diffusing layer that is arranged between the pattern-defining layer and the cover layer.

The display unit according to the invention is suitable to be used in numerous situations and contexts, for example, the context of appliances such as personal care appliances, domestic appliances and medical appliances. Examples of personal care appliances in which the display unit according to the invention may be incorporated include toothbrushes, oral irrigators, flossing devices, facial steamers and shavers. Examples of domestic appliances in which the display unit according to the invention may be incorporated include kitchen appliances such as fryers, cookers, beverage makers and food processors such as juicers and mixers, and cleaning appliances such as vacuum cleaners.

The above-described and other aspects of the invention will be apparent from and elucidated with reference to the following description of relevant aspects of conventional display units and of details of a preferred embodiment of a display unit according to the invention and possible alternatives.

### BRIEF DESCRIPTION OF THE DRAWINGS

The invention will now be explained in greater detail with reference to the figures, in which equal or similar parts are indicated by the same reference signs, and in which:
Fig. 1 illustrates a set-up of a conventional ablation-based display unit;
Fig. 2 illustrates a set-up of a conventional projection-based display unit;
Fig. 3 illustrates a set-up of a display unit according to a practical embodiment of the invention;
Fig. 4 diagrammatically shows a front view of the display unit according to the practical embodiment of the invention; and
Fig. 5 illustrates various possible patterns of light images on the display unit according to the practical embodiment of the invention.

### DETAILED DESCRIPTION OF EMBODIMENTS

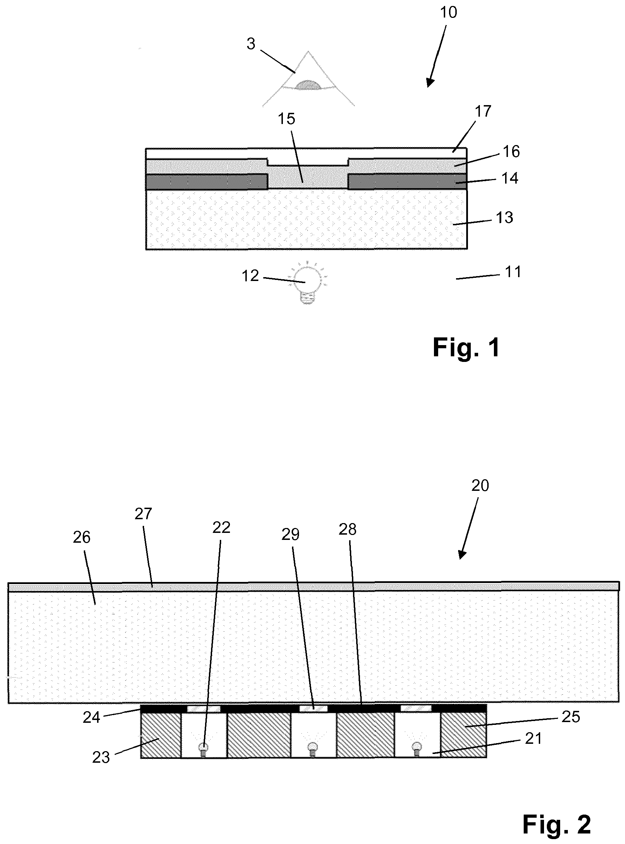

The invention is in the field of layered display units. Before the details of the invention and the possibilities related to the invention will be elucidated, a short explanation of relevant conventional aspects will now be given with reference to figs. 1 and 2.

Fig. 1 serves to illustrate a set-up of a conventional ablation-based display unit 10 and diagrammatically shows a cross-section of a portion of the display unit 10 so that the various layers of the display unit 10 can be seen. A direction from bottom to top in fig. 1 is a direction from a back side to a viewing side of the display unit 10, wherein it is noted that an eye 3 of a user of the display unit 10 is diagrammatically depicted at the top of fig. 1.

From the back side to the viewing side, the conventional ablation-based display unit 10 as shown in fig. 1 comprises the following layers:
- a light-emitting layer 11 that is configured to emit light in an actuated state thereof, and that may comprise individual light sources 12 such as LEDs, lasers, etc.,
- a layer 13 of base material that is transparent to the light emitted by the light sources 12 in the actuated state of the light-emitting layer 11,
- a layer 14 of opaque material provided with ablations 15 at defined positions,
- a layer 16 of semi-transparent white lacquer, and
- a layer 17 of transparent lacquer.

In view of the fact that the light-emitting layer 11 is not at the front of the ablation-based display unit 10, the display unit 10 is of the backlit type. Each of the light sources 12 is arranged at a position that corresponds to the position of an ablation 15 in the layer 14 of opaque material. When a light source 12 is switched on, the light emitted by the light source 12 passes the layer 14 of opaque material at the position of the ablation 15 that is in front of the light source 12, and the user is enabled to see a light image of which size and shape are determined by size and shape of that particular ablation 15.

The shown ablation-based display unit 10 is of the type that is hidden until lit. The fact is that when the light sources 12 are not operated, the display unit 10 generally appears to have a white front surface, due to the presence of the layer 16 of semi-transparent white lacquer. Only when one or more light sources 12 are operated, the light emitted by the light sources 12 successively passes the layer 13 of transparent base material, the ablated layer 14 of opaque material, and the layers 16, 17 of lacquer, so that the user is enabled to see one or more light images in a way as determined by the arrangement of the ablations 15 in the ablated layer 14.

Fig. 2 serves to illustrate a set-up of a conventional projection-based display unit 20 and diagrammatically shows a cross-section of a portion of the display unit 20 so that the various layers and components of the display unit 20 can be seen. A direction from bottom to top in fig. 2 is a direction from a back side to a viewing side of the display unit 20.

From the back side to the viewing side, the conventional projection-based display unit 20 as shown in fig. 2 comprises the following layers and components:
- a light-emitting layer 21 that is configured to emit light in an actuated state thereof, and that may comprise individual light sources 22 such as LEDs, lasers, etc.,
- a masking module 23 that comprises a front layer 24 and walls 25 extending from the front layer 24 in a backward direction so as to extend between different light sources 22 of the light-emitting layer 21 and to thereby separate those light sources 22 from each other,
- a layer 26 of base material that is transparent to the light emitted by the light sources 22 in the actuated state of the light-emitting layer 21, and
- a layer 27 of semi-transparent white lacquer.

In view of the fact that the light-emitting layer 21 is not at the front of the projection-based display unit 20, the display unit 20 is of the backlit type. The front layer 24 of the masking module 23 is arranged at the back side of the layer 26 of base material and has opaque areas 28 at the positions of the walls 25 and transparent areas 29 at positions between the opaque areas 28. When a light source 22 is switched on, the light emitted by the light source 22 passes the front layer 24 of the masking module 23 at the position of the transparent area 29 that is in front of the light source 22, and the user is enabled to see a projected image of which size and shape are determined by size and shape of that particular light source 22.

The shown projection-based display unit 20 is of the type that is hidden until lit. The fact is that when the light sources 22 are not operated, the display unit 20 generally appears to have a white front surface, due to the presence of the layer 27 of semi-transparent white lacquer. Only when one or more light sources 22 are operated, the light emitted by the light sources 22 successively passes the front layer 24 of the masking module 23 at the positions of the transparent areas 29 thereof, the transparent layer 26 of base material, and the layer 27 of lacquer so that the user is enabled to see one or more projected images in a way as determined by the arrangement and design of the light sources 22 in the light-emitting layer 21.

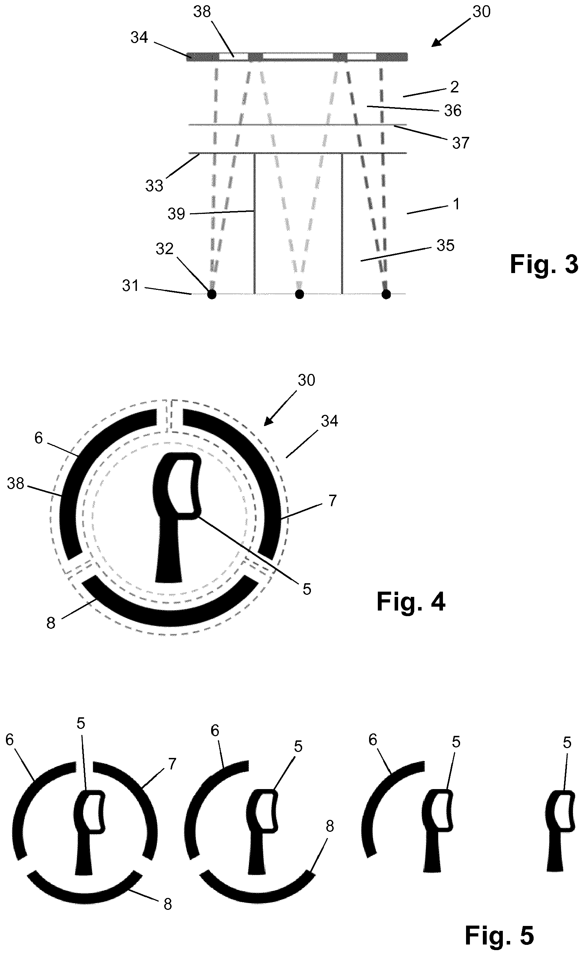

Fig. 3 serves to illustrate a set-up of a display unit 30 according to a practical embodiment of the invention and diagrammatically shows a cross-section of a portion of the display unit 30 so that the various layers of the display unit 30 can be seen. A direction from bottom to top in fig. 3 is a direction from a back side to a viewing side of the display unit 30.

From the back side to the viewing side, the display unit 30 according to the invention as shown in fig. 3 comprises the following layers:
- a light-emitting layer 31 that is configured to emit light in an actuated state thereof, and that may comprise individual light sources 32 such as LEDs, lasers, etc.,
- a light-shaping layer 33 having areas of different transparency to the light emitted by the light sources 32 in the actuated state of the light-emitting layer 31, which may be opaque areas and transparent areas, and
- a pattern-defining layer 34 having areas of different transparency to the light emitted by the light sources 32 in the actuated state of the light-emitting layer 31, which may be opaque areas and transparent areas.

In view of the fact that the light-emitting layer 31 is not at the front of the ablation-based display unit 30, the display unit 30 is of the backlit type. It is practical for the light sources 32 of the light-emitting layer 31 to be arranged on a printed circuit board that may be used for powering the light sources 32. A suitable type of driver (controller) may be provided for enabling various modes of operation of the display unit 30, particularly modes of operation that are different as far as the number of actuated light sources 32 at one time is concerned. Further, it is practical for both the light-shaping layer 33 and the pattern-defining layer 34 to comprise areas that are opaque to the light emitted by the light sources 32 in the actuated state of the light-emitting layer 31, and areas that are transparent to the light. The light-shaping layer 33 may be in the form of a foil or a molded part, for example, and may be provided with ablations, holes, a structured combination of opaque material and transparent material, a patterned coating, etc., whatever is appropriate for having both areas of high transparency to the light and areas of low transparency to the light in the light-shaping layer 33.

It may be practical for the display unit 30 to be composed of two parts 1, 2, namely a back part 1 comprising the light-emitting layer 31, the light-shaping layer 33 and an enclosure 35 of transparent material that is arranged at the front side of the light-emitting layer 31 and that embeds the light-shaping layer 33, and a front part 2 comprising the pattern-defining layer 34 and an enclosure 36 of transparent material that is arranged at the back side of the pattern-defining layer 34. The two enclosures 35, 36 may comprise any suitable material such as a polymer having optimal characteristics when it comes to transparency to the light. In fig. 3, reference numeral 37 is used to indicate an interface between the two enclosures 35, 36, i.e. an interface 37 between the back part 1 and the front part 2. The combination of the two enclosures 35, 36 serves as a transparent sheet in the display unit 30.

It is not necessary for the light-shaping layer 33 to be embedded in the enclosure 35 of the back part 1. As a feasible alternative, the light-shaping layer 33 may be arranged at the interface 37 between the back part 1 and the front part 2, either as an utmost front layer of the back part 1 or as an utmost back layer of the front part 2.

The pattern-defining layer 34 may be provided as an opaque paint layer that is applied to the enclosure 36 of the front part 2, at the front side of the front part 2, and that is provided with ablations 38 for defining the transparent areas of the pattern-defining layer 34. The ablations 38 may be ablations provided on the basis of laser ablation techniques or any other suitable type of ablations. Other possible embodiments of the pattern-defining layer 34 are feasible within the scope of the invention as well.

When a light source 32 is switched on, the light emitted by the light source 32 first passes the light-shaping layer 33 at the position of a transparent area of the light-shaping layer 33 that is covered by the light, and then passes the pattern-defining layer 34 at the position of a transparent area of the pattern-defining layer 34. As a result, the user is enabled to see a projected image of which size and shape are determined by size and shape of the respective transparent area of the pattern-defining layer 34. In the display unit 30, the light-shaping layer 33 serves to accurately define size and shape of the areas through which light is passed on to the pattern-defining layer 34. Thus, the light-shaping layer 33 may be regarded as a layer of virtual light sources that are configured and arranged to project light on the pattern-defining layer 34 in a predetermined manner, wherein it is clearly defined which transparent area of the pattern-defining layer 34 receives light from which light source 32 of the light-emitting layer 31 through the light-shaping layer 33.

In the context of the display unit 30 according to the invention, any pattern of light images as desired may be realized by designing the pattern-defining layer 34 accordingly, and the design of the light-shaping layer 33 may be adapted to the configuration and arrangement of the light sources 32 in the light-emitting layer 31 on the one hand and the design of the pattern-defining layer 34 on the other hand. In particular, size, shape and positioning of the respective transparent areas of the light-shaping layer 33 may be chosen such that respective light beams from the respective light sources 32 are allowed to reach respective transparent areas of the pattern-defining layer 34, wherein a possibility that the respective transparent areas of the pattern-defining layer 34 are reached by light from other light sources 32 than intended is minimized, and wherein a possibility that the respective transparent areas of the pattern-defining layer 34 are not properly addressed so as to realize light images as intended is practically absent. Thus, when the invention is applied, it is possible to very accurately realize a pattern of light images by means of a display unit 30. The pattern may be static or dynamic, may be a pattern that is either fully visible or not at all visible, i.e. either on or off, may include various colors and various intensities of light, etc.

It follows from the foregoing explanation that, in a general sense, an advantageous effect of the invention resides in accurately realizing a pattern of light images, and that such effect can be achieved by having a pattern of areas of different transparency in the light-shaping layer 33 that is adapted to a pattern of areas of different transparency in the pattern-defining layer 34, so that corresponding patterns are obtained in the respective layers 33, 34. As a result, a projected pattern of light as defined by the light-shaping layer 33 coincides with the pattern of ablations 38 in the pattern-defining layer 34.

In fig. 3, by way of example, three light sources 32 are shown, and light beams associated with each of those light sources 32 are indicated by means of dashed lines. Further, in the pattern-defining layer 34, three ablations 38 are shown. It can be seen in the figure that each of the three ablations 38 is in the path of another one of the light beams, implying that each of the three ablations 38 is clearly associated with an appropriate one of the light sources 32.

As is the case with the conventional display units 10, 20 shown in figs. 1 and 2, it is possible for the display unit 30 according to the invention to comprise one or more finishing layers in the form of layers of lacquer, for example. A layer of semi-transparent lacquer may be used to create a hidden until lit effect as explained earlier. Also, it is advantageous if the display unit 30 according to the invention comprises optical barriers 39 at a level between the light-emitting layer 31 and the light-shaping layer 33, as illustrated in fig. 3, for delimiting chambers associated with respective individual light sources 32 so as to further reduce/minimize cross talk, as is the case with the conventional display unit 20 shown in fig. 2.

The invention is applicable to numerous fields, and the design of the display unit 30 according to the invention may be chosen such that any pattern of light images as desired for conveying any type of information to a user can be realized. Examples of fields of application of the invention include the field of personal care appliances, the field of domestic appliances and the field of medical appliances. One of many feasible examples of the design of the pattern-defining layer 34 is a design that is adapted to enable use of the display unit 30 as a battery status indicator.

Fig. 4 serves to illustrate an example of a design of the display unit 30 that enables use of the display unit 30 in an electric toothbrush. In particular, a front view of the display unit 30 is shown, so that the viewing side of the display unit 30 and thus the arrangement of opaque areas and transparent areas in the pattern-defining layer 34 can be seen. In the shown example, the design of the pattern-defining layer 34 is adapted to enable use of the display unit 30 as a brushhead replacement indicator. The pattern-defining layer 34 comprises a central ablation 5 that is shaped like a brushhead, a left top ablation 6 that is shaped like a circle segment, a right top ablation 7 that is shaped like a circle segment, and a bottom ablation 8 that is shaped like a circle segment. The left top ablation 6, the right top ablation 7 and the bottom ablation 8 are arranged such that the respective circle segments constitute a complete circle that is only interrupted at the positions of ends of the ablations 6, 7, 8 facing each other. The light-emitting layer 31 of the display unit 30 comprises four light sources 32, three of which are visible in the view of fig. 3.

For the sake of clarity, it is noted that fig. 4 shows the transparent areas of the pattern-defining layer 34 as black areas in the figure. Further, it is noted that in fig. 4, projected light areas are indicated by means of dashed lines. It can be seen that in the shown example, a central projected light area covering the brushhead ablation 5 is shaped like a circle, and that other projected light areas, i.e. projected light areas covering the respective circle segment ablations 6, 7, 8, are shaped like circle segments. Each ablation 5, 6, 7, 8 is fully covered by only one projected light area without any overlap between the respective projected light areas.

Fig. 5 serves to illustrate various possible patterns of light images on the display unit 30 that can be obtained when the pattern of ablations 5, 6, 7, 8 as shown in fig. 4 is applied. At the left side of fig. 5, a fully lit variant is shown, wherein all of the light sources 32 are actuated and respective ones of the ablations 5, 6, 7, 8 are provided with light from respective associated ones of the light sources 32. At the second position in fig. 5, a first partially lit variant is shown, wherein three of the light sources 32 are actuated and only the brushhead ablation 5, the left top ablation 6 and the bottom ablation 8 are provided with light from respective associated ones of those three light sources 32. At the third position in fig. 5, a second partially lit variant is shown, wherein two of the light sources 32 are actuated and only the brushhead ablation 5 and the left top ablation 6 are provided with light from respective associated ones of those three light sources 32. At the fourth position in fig. 5, a third partially lit variant is shown, wherein one of the light sources 32 is actuated, namely the light source 32 associated with the brushhead ablation 5, and only the brushhead ablation 5 is provided with light from the light source 32.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The term "comprise" as used in this text will be understood by a person skilled in the art as covering the term "consist of'. Hence, the term "comprise" may in respect of an embodiment mean "consist of', but may in another embodiment mean "contain/include at least the defined species and optionally one or more other species".

For the sake of clarity and correct interpretation of the present text, in respect of the terms "opaque", "transparent" and "semi-transparent" as used to indicate characteristics of materials or areas, it is noted that those terms are to be understood for their practical meaning when it comes to rating a capacity of the materials or areas to allow light to pass.

In the foregoing, advantageous aspects of the invention are explained in the context of a practical embodiment of the display unit 30 according to the invention in which the light-emitting layer 31 comprises a number of individual light sources 32, and in which both the pattern-defining layer 34 and the light-shaping layer 33 comprise transparent areas and opaque areas, the number of the transparent areas in both the pattern-defining layer 34 and the light-shaping layer 33 being the same as the number of the individual light sources 32 in the light-emitting layer 31. For the sake of completeness, it is noted that many more embodiments of the display unit 30 are feasible within the framework of the invention. In this respect, it should be understood that it is not essential for the light-emitting layer 31 to comprise a number of individual light sources 32, and also that in actual cases in which individual light sources 32 are applied, there is in fact no fixed relation between the number of individual light sources 32 and the number of transparent areas in both the pattern-defining layer 34 and the light-shaping layer 33. In particular, it may be so that more transparent areas than just one are provided with light from a given light source 32. Further, as suggested earlier, it is not essential for both the pattern-defining layer 34 and the light-shaping layer 33 to comprise transparent areas and opaque areas. What matters in the context of the invention is that areas of different transparency are present in both layers 33, 34.

A summary of the invention may read as follows. A display unit 30 comprises a light-emitting layer 31, a pattern-defining layer 34 and a light-shaping layer 33 located between the pattern-defining layer 34 and the light-emitting layer 31. The light-emitting layer 31 is configured and arranged to emit light in an actuated state thereof, in a direction towards the light-shaping layer 33 and the pattern-defining layer 34. Both the light-shaping layer 33 and the pattern-defining layer 34 comprise areas of different transparency to the light emitted by the light-emitting layer 31 in the actuated state thereof. Advantageously, a pattern of areas of different transparency in the light-shaping layer 33 is adapted to a pattern of areas of different transparency in the pattern-defining layer 34, so that corresponding patterns are obtained in the respective layers 33, 34, and a pattern of light images as projected on the pattern-defining layer 34 and as defined by the light-shaping layer 33 during operation of the display unit 30 may accurately match the pattern of areas of different transparency in the pattern-defining layer 34.

## Claims

1. Display unit (30) comprising a stack of layers (31, 33, 34), the stack of layers (31, 33, 34) including a light-emitting layer (31), a pattern-defining layer (34) and a light-shaping layer (33) located between the pattern-defining layer (34) and the light-emitting layer (31),
- wherein out of the light-emitting layer (31), the pattern-defining layer (34) and the light-shaping layer (33), the pattern-defining layer (34) is located most to a viewing side of the display unit (30),
- wherein the light-emitting layer (31) is configured and arranged to emit light in an actuated state thereof, in a direction towards the light-shaping layer (33) and the pattern-defining layer (34), and
- wherein both the light-shaping layer (33) and the pattern-defining layer (34) comprise areas of different transparency to the light emitted by the light-emitting layer (31) in the actuated state thereof.

2. Display unit (30) according to claim 1, wherein the light-shaping layer (33) is configured to project the light to at least one area (38; 5, 6, 7, 8) of the pattern-defining layer (34) having higher transparency to the light than at least one other area of the pattern-defining layer (34).

3. Display unit (30) according to claim 1 or 2, wherein at least one of the light-shaping layer (33) and the pattern-defining layer (34) comprises material configured to block the light, and wherein, in at least one of the light-shaping layer (33) and the pattern-defining layer (34), at least one area of the respective layer (33, 34) having higher transparency to the light than at least one other area of the respective layer (33, 34) comprises an ablation (38; 5, 6, 7, 8) of the material.

4. Display unit (30) according to any of claims 1-3, wherein at least one of the light-shaping layer (33) and the pattern-defining layer (34) comprises material that is provided with a patterned coating.

5. Display unit (30) according to any of claims 1-4, wherein the pattern-defining layer (34) comprises at least two areas (38; 5, 6, 7, 8) having higher transparency to the light than at least one other area of the pattern-defining layer (34), and wherein the light-shaping layer (33) is configured to project the light to each of the at least two areas (38; 5, 6, 7, 8) of the pattern-defining layer (34) having higher transparency to the light.

6. Display unit (30) according to claim 5, wherein the light-emitting layer (31) comprises at least two light-emitting areas (32), and wherein the light-shaping layer (33) is configured to project the light emitted by respective light-emitting areas (32) of the light-emitting layer (31) in the actuated state of the light-emitting layer (31) to respective areas (38; 5, 6, 7, 8) of the pattern-defining layer (34) having higher transparency to the light, such that each of the respective areas (38; 5, 6, 7, 8) of the pattern-defining layer (34) is provided with light of only one of the light-emitting areas (32) of the light-emitting layer (31).

7. Display unit (30) according to claim 6, comprising optical barriers (39) separating the light-emitting areas (32) of the light-emitting layer (31) at a position between the light-emitting layer (31) and the light-shaping layer (33).

8. Display unit (30) according to claim 6 or 7, comprising a driver configured to separately vary the intensity of the light emitted by the respective light-emitting areas (32) of the light-emitting layer (31) in the actuated state of the light-emitting layer (31).

9. Display unit (30) according to any of claims 1-8, wherein the light-shaping layer (33) comprises at least one of i) a sheet of material provided with at least one hole for allowing the light to pass through, ii) at least one piece of material that is configured to block the light and at least one piece of material that is transparent to the light, and iii) a sheet of material that is transparent to the light and that is covered on one side thereof by a coating that is configured to block the light and that has at least one ablated area.

10. Display unit (30) according to any of claims 1-9, wherein the pattern-defining layer (34) comprises at least one of i) at least one piece of material that is configured to block the light and at least one piece of material that is transparent to the light, and ii) a sheet of material that is transparent to the light and that is covered on one side thereof by a coating that is configured to block the light and that has at least one ablated area.

11. Display unit (30) according to any of claims 1-10, comprising a sheet (35, 36) that is transparent to the light and that is provided on one side thereof with a paint layer (34) having at least one ablated area (38; 5, 6, 7, 8), the paint layer (34) defining the areas of the pattern-defining layer (34) of different transparency to the light.

12. Display unit (30) according to claim 11, wherein the light-shaping layer (33) is integrated in the sheet (35, 36), at a distance from the paint layer (34).

13. Display unit (30) according to any of claims 1-12, comprising a cover layer applied to the pattern-defining layer (34) at the viewing side of the display unit (30), the cover layer being only partially transparent to the light.

14. Display unit (30) according to claim 13, wherein a light-diffusing layer is arranged between the pattern-defining layer (34) and the cover layer.

15. Appliance comprising a display unit (30) according to any of claims 1-14, the appliance being one of a personal care appliance, a domestic appliance and a medical appliance.
